# EUROPÄISCHE PATENTSCHRIFT

(11) **EP 1 704 764 B1**
(45) Veröffentlichungstag und Bekanntmachung des Hinweises auf die Patenterteilung: **30.07.2008**
(21) Anmeldenummer: 06005443.4
(22) Anmeldetag: 17.03.2006
(51) Int. Cl.: A01C 7/04

(54) **Vorrichtung zum Zuführen von Samenkörnern**
Seed feeding device
Dispositif pour fournir des semences

(30) Priorität: 23.03.2005 DE 102005013397
(43) Veröffentlichungstag der Anmeldung: 27.09.2006
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A- 0 171 535
- DE-A1- 10 140 773
- FR-A- 2 641 441
- US-A- 3 156 201

## Beschreibung

Die Erfindung betrifft eine Vorrichtung zum Zuführen von Samenkörnern.

Die Erfindung betrifft eine Vorrichtung zum Zuführen von Samenkörnern gemäß des Oberbegriffes des Patentanspruches 1.

Eine derartige Vorrichtung ist beispielsweise in der DE 101 40 773. B4 beschrieben. Bei dieser Vorrichtung ist der Boden mit einem Winkel von ca. 45° zur Horizontalen angestellt, so dass das im Versorgungsfach befindliche Saatgut aufgrund des Rutschwinkels und der Schwerkraft in Richtung der Trommel rutscht. In den der Trommel benachbarten Bereich sind Öffnungen zum Durchlass von Druckluft in das Verteilergehäuse angeordnet, um das Saatgut im Bereich der Trommel aufzulockern bzw. in einen Fluidisierungszustand zu versetzen, damit das Saatgut sich leichter an die Perforierung der Vereinzelungstrommel anlagern kann. Aufgrund der starken Neigung des Bodens ist eine zusätzliche Wand zwischen dem Versorgungsfach und dem Durchmengungsfach angeordnet, um nur in reduzierter Weise Saatgut an die Trommel gelangen zu lassen. Diese zusätzliche Wand muss sehr genau eingestellt werden, um in ausreichender Weise Saatgut an die Trommel gelangen zu lassen.

Durch die EP 0 598 636 B1 ist eine weitere Vorrichtung zum Zuführen von Samenkörner zu einer rotierend angetriebenen und perforierten Vereinzelungstrommel einer Einzelkornsämaschine bekannt. Um das Anlagern der Samenkörner an die Perforierung der perforierten Trommel zu erleichtern, ist ein mechanisches Rührwerk im Bereich der Trommel angeordnet. Ferner ist in diesem Dokument darauf hingewiesen, dass man auch zusätzliche pneumatische Mittel zur mechanischen Durchmengung vorsehen kann, um ein Fließbett von Samenkörnern nahe der Trommel zu erzeugen. In welcher Weise diese pneumatischen Mittel angeordnet sein können, ist hier nicht angegeben.

Der Erfindung liegt die Aufgabe zugrunde, eine einfache Ausgestaltung der Zuführung der Samen zu der Trommel und eine gute pneumatische Durchmengung der Samenkörner in den Anlagerungsbereich der Samenkörner an die Trommel zu erreichen.

Diese Aufgabe wird erfindungsgemäß durch die kennzeichnenden Merkmale des Patentanspruches 1 gelöst. Infolge dieser Maßnahmen wird in überraschend einfacher Weise eine kontinuierliche und dosierte Zuleitung der Samenkörner in den Anlagerungsbereich der Trommel erreicht. Aufgrund der relativ geringen Neigung des Bodens zur Horizontalen im Zuführungsbereich der Samenkörner an die Trommel, wird durch die Selbsthemmung der Samenkörner untereinander ein dosiertes Zuleiten der Samenkörner an die Trommel gewährleistet, wobei der Zufluss der Samenkörner durch die durch die in dem Boden befindlichen Öffnungen eingeblasene Luft reguliert wird. Die eingeblasene Luft gewährleistet gleichzeitig eine Fluidisierung der Samenkörner im Anlagerungsbereich zur Unterstützung der Anlagerung der Samenkörner an die Trommel.

Als vorteilhaft hat sich herausgestellt, dass die Öffnungen sich von der Trommel aus gesehen über 30-90%, vorzugsweise ca. 60-65% der Länge des Bodens zwischen der Trommel und der Wand erstrecken.

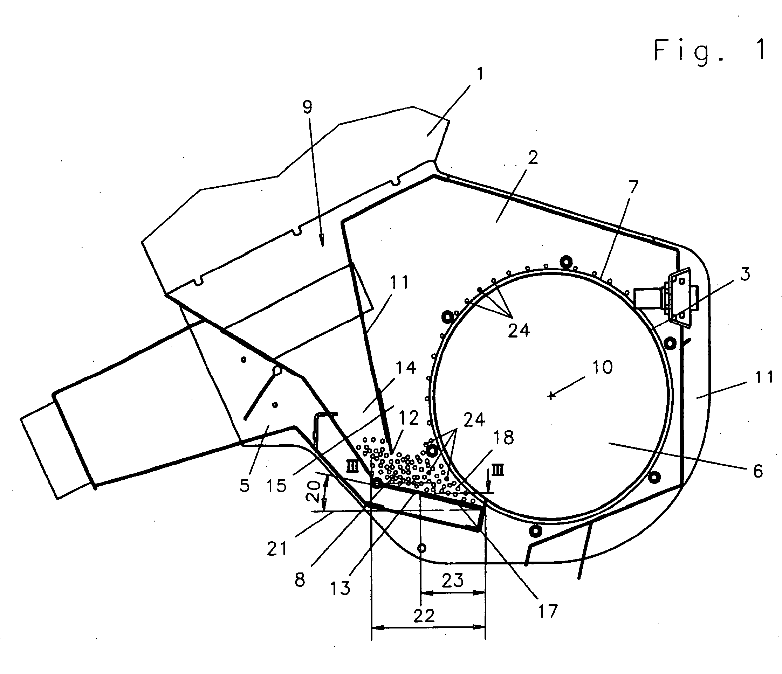

Weitere Einzelheiten der Erfindung sind der Beispielsbeschreibung und den Zeichnungen zu entnehmen. Hierbei zeigen
- Fig. 1: den Vorratsbehälter und die Vereinzelungstrommel der Sämaschine in vereinfachter und ausschnittsweiser Darstellung, in Seitenansicht,

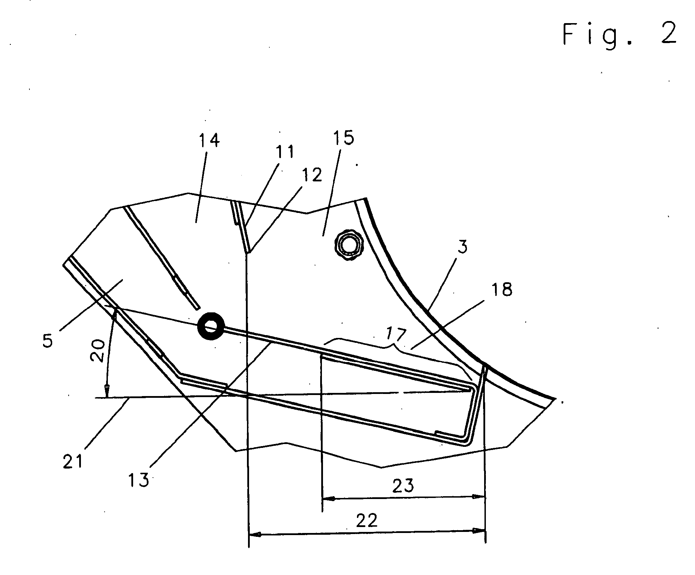

- Fig. 2: den Zuführungsbereich des Saatgutes an die Trommel in vergrößerter Darstellung und in Seiten- und in Teilansicht und

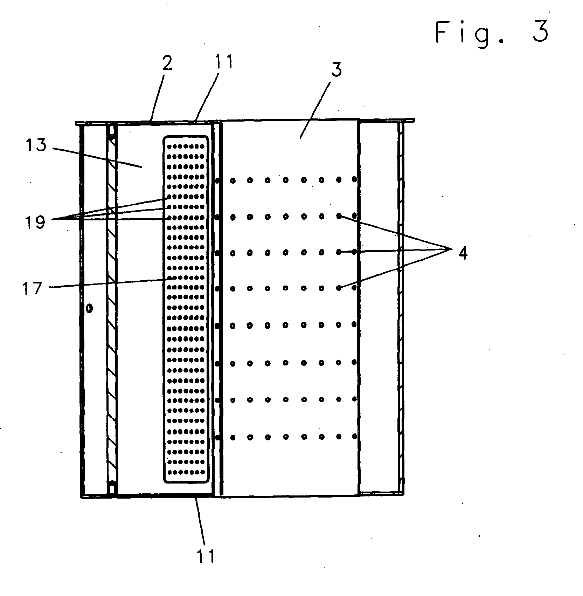

- Fig. 3: der Boden im Zuführungsbereich zwischen der Trommel in der Ansicht III/III.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. In der Umfangsfläche der Vereinzelungstrommel 3 sind kreisförmig angeordnete Perforationsreihen 4 angeordnet. Der Vorratsbehälter 1 und das Gehäuse 2 oberhalb der Trommel 3 sind zumindest annähernd druckdicht mittels eines Deckels verschlossen. Über den Luftanschlusskasten 5 ist der Vorratsbehälter 1 und das Gehäuse 2 oberhalb der Trommel 3 durch das in dem Anschlusskasten 5 angeschlossene und nicht dargestellte Druckgebläse mit Druckluft beaufschlagbar, so dass die Perforationsreihen 4 mit einer Druckdifferenz zwischen dem Innenraum 6 der Vereinzelungstrommel 3 und dem Außenbereich 7 der Vereinzelungstrommel 3 erzeugt wird. Aufgrund dieser Druckdifferenz lagern sich an den Perforationsreihen 4 der Vereinzelungstrommel 3, wenn diese durch den Saatgutvorrat 8, der sich aufgrund der Führung des Saatgutschachtes 9 bis unterhalb der Drehachse 10 der Trommel 3 erstreckt, die Samenkörner an. Der Saatgutvorratsbehälter 1 bzw. das Gehäuse unterhalb des Saatgutvorratsbehälters 1, in dem die Vereinzelungstrommel 3 drehend und abdichtend gelagert ist, weist die einander beabstandeten Seitenwände 11 auf, die sich parallel zur Bewegungsrichtung der Trommel 3 erstrecken und mit der Trommel 3 zumindest annähernd abdichtend zusammen wirken.

Der Versorgungsschacht 9 des Verteilergehäuses 2 ist durch eine aufrecht verlaufende Wand, deren unterer Rand 12 beabstandet zu dem Boden 13 des Verteilergehäuses 2 endet, in ein Versorgungsfach 14 und ein Durchmengungsfach 15 unterteilt. Der untere Rand 12 der aufrecht verlaufenden Wand 11 ist in der Höhe einstellbar, so dass der Durchlass 16 zwischen dem Boden 13 des Verteilergehäuses 2, welcher gleichzeitig der Boden 13 des Versorgungsfaches 14 und des Durchmengungsfaches 15 ist, einstellbar ist. Ein Teilbereich 17 des Bodens 13 des Durchmengungsfaches 15 weist in dem der Trommel 3 benachbarten Bereich 18 Öffnungen 19 zum Durchlass von Druckluft in das Verteilergehäuse 2 auf. Diese Druckluft gelangt durch den Anschlusskasten 5 in diesen Bereich 18.

Der Boden 13 weist einen Neigungswinkel 20 zwischen 8-20°, vorzugsweise 13° zur Horizontalen 21 auf. Die Länge 22 des Bodens 13 zwischen der Trommel 3 und der aufrecht verlaufenden Wand 11 beträgt zwischen 100 und 160mm, vorzugsweise ca. 120mm. Der Teilbereich 17, in dem sich die Öffnungen finden, erstreckt sich von der Trommel 3 ausgesehen über eine Länge 23 zwischen 50-90mm, vorzugsweise ca. 75mm. Somit erstrecken sich die Öffnungen 19 von der Trommel 3 aus gesehen über 30-90%, vorzugsweise ca.60-65% der Länge 22 des Bodens 13 zwischen der Trommel 3 und der aufrecht verlaufenden Wand 11, welche das Durchmengungsfach 15 von dem Versorgungsfach 14 trennt.

Aufgrund der geringen Neigung des Bodens 13 zur Horizontalen 21 zwischen 8-20°, vorzugsweise 13° zur Horizontalen 21 rutscht das sich im Versorgungsfach 14 befindliche Saatgut 8 aufgrund der Eigenreibung zwischen den einzelnen Samenkörnern 24 gezielt nach. Die Zuführung der Samenkörner 24 wird durch das Einblasen von Druckluft durch die Öffnungen 19 in den Boden 13 gesteuert, so dass immer ausreichend Saatgut 8 aus dem Versorgungsfach 14 in das Durchmengungsfach 15 nachfließt. Durch die eingeblasene Druckluft, durch die Öffnungen 19 in den Boden 13 wird das Saatgut im Bereich der Trommel 3 aufgelockert, so dass es teilweise einen Fluidisierungszustand erreicht, so dass das Anlagern der Samenkörner 24 an den Perforierungen der Perforationsreihen 4 der Trommel 3 erleichtert wird. Aufgrund der herrschenden Druckdifferenz zwischen Innenraum 6 und Außenraum 7 der Trommel 3 lagern sich die Samenkörner 24 an den Perforierungen der Trommel 3 an.

## Patentansprüche

1. Vorrichtung zum Zuführen von Samenkörnern zu einer rotierend und perforierten Vereinzelungstrommel (3) einer Einzelkornsämaschine, wobei die Vorrichtung aus einem Verteilergehäuse (2) gebildet ist, das an die Vereinzelungstrommel (3) anschließt und sich horizontal über deren gesamte Breite erstreckt und das mit einem zur Vereinzelungstrommel (3) geneigten Boden (13) versehen ist, der bis an die perforierte Trommel (3) anschließt, wobei das Verteilergehäuse (2) durch eine mit ihrem unteren Rand beabstandet zum Boden (13) angeordnete, aufrecht verlaufende Wand in ein Versorgungsfach (14) und ein Durchmengungsfach (15) unterteilt ist, wobei in dem Boden (13) des Durchmengungsfaches (15) in dem der Trommel (3) benachbarten Bereich (18) Öffnungen (19) zum Durchlass von Druckluft in das verteilergehäuse (2) angeordnet sind, **dadurch gekennzeichnet, dass** der Boden (13) eine Neigung (20) zwischen 8 und 20°, vorzugsweise 13° zur Horizontalen (21) aufweist, dass die Länge (22) des Bodens (13) zwischen der Trommel (3) und der Wand (11) zwischen 100 und 160mm, vorzugsweise ca. 120mm beträgt, und dass die Öffnungen (19) sich von der Trommel (3) aus gesehen, über eine Länge (23) zwischen 50 und 90mm, vorzugsweise ca. 75mm erstrecken.

2. Vorrichtung nach Anspruch 1, **dadurch gekennzeichnet, dass** die Öffnungen (19) sich von der Trommel (3) aus gesehen über 30-90%, vorzugsweise ca. 60-65% der Länge (23) des Bodens (13) zwischen der Trommel (3) und der Wand (11) erstrecken.

## Claims

1. Apparatus for supplying seed grains to a rotating and perforated separating drum (3) of a single grain dispensing seed drill, the apparatus being formed from a distributor housing (2), which communicates with the separating drum (3) and extends horizontally over the entire width thereof, and which is provided with a base (13), which is inclined relative to the separating drum (3), and which communicates with the perforated drum (3), the distributor housing (2) being divided, by an upwardly extending wall disposed with its lower edge at a spacing from the base (13), into a supply compartment (14) and a mixing compartment (15), openings (19) for allowing compressed air to pass into the distributor housing (2) being disposed in the base (13) of the mixing compartment (15), in the region adjacent the drum (3), **characterised in that** the base (13) has an inclination (20) of between 8° and 20°, preferably 13°, relative to the horizontal (21), **in that** the length (22) of the base (13) between the drum (3) and the wall (11) is between 100 mm and 160 mm, preferably approx. 120 mm, and **in that** the openings (19), when viewed from the drum (3), extend over a length (23) of between 50 mm and 90 mm, preferably approx. 75 mm.

2. Apparatus according to claim 1, **characterised in that** the openings (19), when viewed from the drum (3), extend over 30 - 90 %, preferably over approx. 60 - 65 %, of the length (23) of the base (13) between the drum (3) and the wall (11).

## Revendications

1. Dispositif pour l'alimentation en graines de semences d'un tambour séparateur (3) perforé, rotatif, d'un semoir de précision,
le dispositif se composant d'un boîtier de distributeur (2) relié au tambour séparateur (3), s'étendant horizontalement sur toute la largeur de celui-ci, et comportant un fond (13) incliné en direction du tambour séparateur (3), ce fond rejoignant le tambour perforé (3),
le boîtier de distributeur (2) étant subdivisé en un compartiment d'alimentation (14) et en un compartiment de mélange (15) par une cloison remontant dont le bord inférieur est écarté du fond (13),
le fond (13) du compartiment de mélange (15) ayant dans sa zone (18) voisine du tambour (3), des orifices (19) pour le passage de l'air comprimé dans le boîtier de distributeur (2),
**caractérisé en ce que**
le fond (13) a une inclinaison (20) comprise entre 8° et 20° et de préférence égale à 13° par rapport à la direction horizontale (21),
la longueur du fond (13) entre le tambour (3) et la paroi (11) est comprise entre 100 et 160 mm, et est de préférence égale à environ 120 mm et
les orifices (19) vus à partir du tambour (3), s'étendent sur une longueur (23) comprise entre 50 et 90 mm et de préférence de l'ordre de 75 mm.

2. Dispositif selon la revendication 1,
**caractérisé en ce que**
les ouvertures (19) vues à partir du tambour (3) s'étendent sur 30-90 %, de préférence environ 60-65 % de la longueur (23) du fond (13) entre le tambour (3) et la paroi (11).
